# EUROPÄISCHE PATENTSCHRIFT

(11) **EP 3 689 718 B1**
(45) Veröffentlichungstag und Bekanntmachung des Hinweises auf die Patenterteilung: **11.01.2023**
(21) Anmeldenummer: 20153350.2
(22) Anmeldetag: 23.01.2020
(51) Int. Cl.: B62D 27/06, B60N 2/015, B60N 2/24, B60N 2/30, B62D 23/00, B62D 31/02

(54) **FAHRZEUG, VORZUGSWEISE NUTZFAHRZEUG, MIT EINEM GITTERRAHMEN**
VEHICLE, PREFERABLY COMMERCIAL VEHICLE, WITH A GRID FRAME
VÉHICULE, DE PRÉFÉRENCE VÉHICULE UTILITAIRE, DOTÉ D'UN CADRE DE CALANDRE

(30) Priorität: 04.02.2019 DE 102019102687
(43) Veröffentlichungstag der Anmeldung: 05.08.2020
(60) Teilanmeldung: 22203255.9
(73) Patentinhaber: MAN Truck & Bus SE, 80995 München (DE)
(72) Erfinder: Jacquemart-Purson, Amélie, 85757 Karlsfeld (DE); Klitzing, Tatjana, 81669 München (DE)
(74) Vertreter: v. Bezold & Partner Patentanwälte - PartG mbB

(56) Entgegenhaltungen:
- WO-A1-95/32882
- WO-A1-2008/155008
- CN-A- 109 080 706
- CN-U- 202 463 930
- US-A- 2 119 655
- US-A1- 2012 160 589
- US-A1- 2017 174 269

## Beschreibung

Die Erfindung betrifft ein Fahrzeug, vorzugsweise ein Nutzfahrzeug, z. B. einen Omnibus, aufweisend einen Gitterrahmen und mindestens eine Ausstattungskomponente, vorzugsweise Innenausstattungskomponente.

Es ist bekannt, bspw. Omnibusse mit einem Fahrzeuggerippe bzw. einen Gitterrahmen als mechanisch tragende Struktur auszustatten. Der Gitterahmen kann aus mehreren in Anbindungspunkten miteinander verbundenen Profilen zusammengesetzt sein und einen Fahrgastraum des Omnibusses schützend umgeben.

Bspw. offenbart die WO 2008/155008 A1 eine Gerippestruktur für einen Omnibus mit jeweils wenigstens zwei im Bereich einer zugeordneten Seitenwand angeordneten Gerippesäulen, welche sich zwischen einer Bordkante der zugeordneten Seitenwand und einem Dach erstrecken, wobei die einander zugeordneten wenigstens zwei Gerippesäulen eine zumindest im Wesentlichen dreieckförmige Versteifungsstruktur bilden.

Die US 2 119 655 A bezieht sich auf eine Form einer Fahrzeugkarosserie, die in erster Linie für die Verwendung als Bus zur Beförderung einer relativ großen Anzahl von Fahrgästen geeignet ist. Die im Inneren des Körpers zu montierenden Sitze bestehen aus einem allgemein rechteckigen Grundrahmen, der aus geeigneten rohrförmigen Elementen gebildet wird, die an ihren Enden mit dem untersten, sich in Längsrichtung erstreckenden Rahmenelement verbunden sind. Diese Schrift offenbart ein Fahrzeug gemäß dem Oberbegriff des Anspruch 1.

Die CN 202 463 930 U D1 offenbart eine Volllast-Fahrzeugkarosseriestruktur eines Busses. Die Volllast-Fahrzeugkarosseriestruktur umfasst eine Vorderwandbaugruppe, eine Rückwandbaugruppe, eine obere Abdeckungsbaugruppe, eine Fahrgestellbaugruppe und eine Stützpfostenbaugruppe.

Die US 2017/174269 A1 offenbart ein Sightseeing-Touring-Fahrzeug mit Bühne, das eine offene Architektur mit breiten Fenstern aufweist, die die Sightseeing-Touring-Insassen umgeben. Die offene Architektur bietet optimale Sicht auf die umliegenden Sehenswürdigkeiten, einschließlich des Blicks auf ein großes Videodisplay, während der Komfort eines herkömmlichen Fahrzeugs für die Insassen erhalten bleibt.

Die US 2012/160589 A1 offenbart einen Fahrzeugkarosserierahmen mit einem Hauptrahmen, der ein Bodenelement und ein Paar rechter und linker Seitenelemente umfasst, und einen Hilfsrahmen zur Verstärkung des Hauptrahmens.

Der Erfindung liegt die Aufgabe zu Grunde, ein alternatives und/oder verbessertes Fahrzeug mit Gitterrahmen zu schaffen.

Die Aufgabe wird gelöst durch die Merkmale des unabhängigen Anspruchs 1. Vorteilhafte Weiterbildungen sind in den abhängigen Ansprüchen und der Beschreibung angegeben.

Die Erfindung schafft ein Fahrzeug, vorzugsweise Nutzfahrzeug, zum Beispiel Omnibus, aufweisend einen Gitterrahmen (z. B. Gitterrohrrahmen und/oder Gitterprofilrahmen), der eine Gerippetragstruktur des Fahrzeugs bildet und einen Personenaufenthaltsraum (zum Beispiel Fahrgastraum und/oder Fahrerarbeitsplatz) des Fahrzeugs (z. B. einseitig oder mehrseitig) begrenzt (z. B. teilweise oder vollständig umhüllt oder umgibt). Das Fahrzeug weist mindestens eine Ausstattungskomponente, vorzugsweise Innenausstattungskomponente (z. B. Interieurkomponente), auf, die in dem Personenaufenthaltsraum angeordnet ist und zumindest teilweise als ein tragender Abschnitt des Gitterahmens in den Gitterrahmen (z. B. direkt und/oder beim Fertigen des übrigen Gitterrahmens) integriert ist, vorzugsweise zum Bilden eines neuen Lastpfads in dem Gitterrahmen.

Erfindungsgemäß kann die Fahrzeugstruktur, vorzugsweise Busstruktur, in ihrer Gesamtheit betrachtet werden. Ausstattungskomponenten im Personenaufenthaltsraum können als tragende Abschnitte in den Gitterrahmen integriert sein. Abweichend vom Stand der Technik können so bspw. Trennwände, Haltestangen, Ablagen, Podeste und Stufen direkt in den Gitterrahmen bzw. die Gerippestruktur integriert werden, anstatt diese nachträglich ohne tragende Funktion im oder am Gitterahmen zu montieren. Herkömmlich werden bspw. Podeste zusätzlich in dem Personenaufenthaltsraum montiert und übernehmen keine tragende Funktion für den Gitterrahmen. Sie werden angeordnet, um zusätzlichen Bauraum zu schaffen, den man bspw. für Nebenaggregate (z. B. Luftpresser oder Zusatztank oder eine Achse braucht. Es ist somit möglich, die Ausstattungskomponenten zur Kraftüberragung im Gitterrahmen mit einzubeziehen. So übernehmen sie zusätzliche Funktionen im Fahrzeug. Durch die neue dedizierte Anwendung der Ausstattungskomponenten können diese genau für eine feste Position ausgelegt sein. Um die Pluralität der Funktionen zu gewährleisten, können bspw. noch Geometrieänderungen (z. B. Dicke, Querschnitt, Form usw.) möglich sein. Durch die funktionsintegrierten Komponenten können die Kraftübertragungen im Fahrzeug neu erfolgen. Es entstehen neue Lastpfade. Dank der neuen Lastpfade können andere Abschnitte des Gitterrahmens entlastet werden und somit geringer dimensioniert werden. Dies kann zu einem verringerten Gesamtgewicht des Fahrzeuges führen. Ferner kann die Nutzung von Ausstattungskomponenten als tragende Abschnitte des Gitterrahmens dazu genutzt werden, vorhandene Asymmetrien im Gitterrahmen (z. B. Türöffnungen nur auf einer Fahrzeugseite) besser auszugleichen. Dadurch kann auch das Fahrverhalten des Fahrzeugs verbessert werden.

Zweckmäßig kann der Gitterrahmen als tragende Fahrzeugstruktur des Fahrzeugs dienen.

Vorzugsweise kann der tragende Abschnitt als einer der Lastpfade des Gitterrahmens wirken.

In einem Ausführungsbeispiel weist die mindestens eine Ausstattungskomponente mindestens einer, vorzugsweise einen geradlinigen oder gebogenen stangen- oder rohrförmigen Träger (z. B. Spant), vorzugsweise Längsträger, Querträger, Vertikalträger und/oder Diagonalträger (z. B. als Rohr und/oder Profil), des Gitterrahmens als den tragenden Abschnitt auf. Damit kann die Ausstattungskomponente auf besonders einfache Weise zumindest abschnittsweise direkt in den Gitterrahmen integriert werden.

Es ist auch möglich, dass bspw. der tragende Abschnitt als Volumenkörper gebildet ist, der bspw. mittels eines additiven Fertigungsverfahrens oder mittels Schmieden oder mittels Gießen o. a. gefertigt werden kann.

In einem weiteren Ausführungsbeispiel ist die mindestens eine Ausstattungskomponente oberhalb eines Bodens des Personenaufenthaltsraums und/oder unterhalb eines Dachs des Personenaufenthaltsraums des Fahrzeugs angeordnet.

In einem nicht beanspruchten Ausführungsbeispiel weist die mindestens eine Ausstattungskomponente eine (vorzugsweise zumindest teilweise vertikalverlaufende, horizontalverlaufende und/oder schrägverlaufende) Hand-Festhaltestange als den tragenden Abschnitt des Gitterrahmens auf. Die Hand-Festhaltestange kann somit insbesondere zwei Aufgaben übernehmen. Einerseits kann sie den Passagieren zum Festhalten dienen. Andererseits kann sie einen neuen Lastpfad im Gitterrahmen bereitstellen.

In einer nicht beanspruchten Ausführungsform weist die mindestens eine Ausstattungskomponente eine Innentrennwand auf, die vorzugsweise mindestens einen oder mehrere (z. B. Längs-, Quer- und/oder Diagonal-) Träger als den tragenden Abschnitt des Gitterrahmens aufweist. Die Innentrennwand kann somit insbesondere zwei Aufgaben übernehmen. Einerseits kann sie den Personenaufenthaltsraum unterteilen. Andererseits kann sie einen neuen Lastpfad im Gitterrahmen bereitstellen.

Erfindungsgemäß weist die mindestens eine Ausstattungskomponente eine Fahrzeugsitzvorrichtung und/oder ein Anlehnvorrichtung auf, die vorzugsweise mindestens einen oder mehrere (z. B. Längs-, Quer- und/oder Diagonal-) Träger als den tragenden Abschnitt des Gitterrahmens aufweist, wobei vorzugsweise der Träger als ein Befestigungsträger zum Befestigen eines Sitzes oder einer Lehne (z. B. Stehlehne) ausgebildet ist. Die Fahrzeugsitzvorrichtung kann somit insbesondere zwei Aufgaben übernehmen. Einerseits kann sie als Sitz für Personen im Personenaufenthaltsraum dienen. Andererseits kann sie einen neuen Lastpfad im Gitterrahmen bereitstellen.

In einer nicht beanspruchten Ausführungsform weist die mindestens eine Ausstattungskomponente eine Gepäckablage und/oder ein Aufnahmefach auf, die oder das vorzugsweise mindestens einen oder mehrere (z. B. Längs-, Quer- und/oder Diagonal-) Träger als den tragenden Abschnitt des Gitterrahmens aufweist. Die Gepäckablage und/oder das Aufnahmefach kann somit insbesondere zwei Aufgaben übernehmen. Einerseits können sie als Ablage oder Aufnahme für Gepäck im Personenaufenthaltsraum dienen. Andererseits können sie einen neuen Lastpfad im Gitterrahmen bereitstellen.

Beispielsweise kann die Gepäckablage und/oder das Aufnahmefach bodenseitig, wandseitig und/oder dachseitig im Personenaufenthaltsraum angeordnet sein.

In einer nicht beanspruchten Ausführungsform weist das Fahrzeug ferner ein Podest, vorzugsweise Fußpodest, Motorpodest, Sitzpodest oder Achspodest, oder eine Stufe auf, das oder die mindestens einen oder mehrere (z. B. Längs-, Quer- und/oder Diagonal-) Träger als den tragenden Abschnitt des Gitterrahmens aufweist. Damit kann das Podest somit insbesondere zwei Aufgaben übernehmen. Einerseits kann es bspw. als Fußablage für Personen im Personenaufenthaltsraum dienen und/oder Bauraum für ein Nebenaggregat schaffen. Andererseits kann es einen neuen Lastpfad im Gitterrahmen bereitstellen.

Zweckmäßig kann das Podest eine Innenstruktur (z. B. in Form eines Raumfachwerks) aufweisen, die als der tragende Abschnitts oder eines Teils davon dient oder wirkt. Das Podest unterscheidet sich somit insbesondere von einem einfachen Blechteil oder einem leeren kofferförmigen Podest, d.h. einem Podest ohne Innenstruktur.

In einer Ausführungsvariante bildet der Gitterrahmen eine oder beide Längsaußenseiten, eine Front, ein Heck, eine Bodengruppe und/oder ein Dach des Fahrzeugs.

Zweckmäßig kann der Gitterrahmen mehrere um eine Längsachse des Fahrzeugs umlaufende Ringspanten und mehrere Träger in Längs- und Querrichtung des Fahrzeugs aufweisen, z. B. zum Bilden eines Dachs, einer Bodengruppe und/oder einer Längsaußenseitenwand. Die Träger und Ringspanten können sowohl im Interieur wie im Exterieur vorhanden sein, abhängig von den gewünschten Lastpfaden.

In einer weiteren Ausführungsvariante ist der tragende Abschnitt lösbar, vorzugsweise verschraubt, mit dem übrigen Gitterrahmen verbunden. Alternativ kann der tragende Abschnitt beispielsweise unlösbar, vorzugsweise verklebt oder verschweißt, mit dem übrigen Gitterrahmen verbunden sein.

Erfindungsgemäß bildet der Gitterrahmen (z. B. unter anderem) eine Außenseitenwand des Fahrzeugs, wobei die Außenseitenwand mehrere Träger des Gitterrahmens aufweist, die sich in einem Anbindungspunkt (z. B. Knotenpunkt) treffen; und der tragende Abschnitt der mindestens einen Ausstattungskomponente mit der Außenseitenwand in dem Anbindungspunkt der Außenseitenwand zusammentrifft. Damit kann der tragende Abschnitt die Lasten direkt von mehreren Trägern der Außenseitenwand aufnehmen und Lasten direkt in mehrere Träger der Außenseitenwand einleiten. Die Träger der Außenseitenwand sowie der tragende Abschnitt der Ausstattungskomponente können somit zweckmäßig als ein Raumfachwerk wirken.

In einem weiteren Ausführungsbeispiel bildet der Gitterrahmen (z. B. unter anderem) ein Dach des Fahrzeugs, wobei das Dach mehrere Träger des Gitterrahmens aufweist, die sich in einem Anbindungspunkt treffen. Vorzugsweise kann der tragende Abschnitt der mindestens einen Ausstattungskomponente mit dem Dach in dem Anbindungspunkt des Dachs zusammentreffen. Damit kann der tragende Abschnitt die Lasten direkt von mehreren Trägern des Dachs aufnehmen und Lasten direkt in mehrere Träger des Dachs einleiten. Die Träger des Dachs sowie der tragende Abschnitt der Ausstattungskomponente können somit zweckmäßig als ein Raumfachwerk wirken.

Erfindungsgemäß bildet der Gitterrahmen (z. B. unter anderen) eine Bodengruppe des Fahrzeugs, wobei die Bodengruppe mehrere Träger des Gitterrahmens aufweist, die sich in einem Anbindungspunkt treffen; und der tragende Abschnitt der mindestens einen Ausstattungskomponente mit der Bodengruppe in dem Anbindungspunkt der Bodengruppe zusammentrifft.

Damit kann der tragende Abschnitt die Lasten direkt von mehreren Trägern des Bodens aufnehmen und Lasten direkt in mehrere Träger des Bodens einleiten. Die Träger des Bodens sowie der tragende Abschnitt der Ausstattungskomponente können somit zweckmäßig als ein Raumfachwerk wirken.

Zweckmäßig kann der tragende Abschnitt mit mindestens zwei Anbindungspunkten der Außenseitenwand, des Daches und/oder der Bodengruppe zusammentreffen.

Beispielsweise kann sich der tragende Abschnitt zwischen einem Anbindungspunkt der Außenseitenwand und einem Anbindungspunkt der Bodengruppe oder des Dachs erstrecken.

Es ist auch möglich, dass der tragende Abschnitt der mindestens einen Ausstattungskomponente mit einem gemeinsamen Anbindungspunkt von dem Dach und der Außenseitenwand, der Front oder dem Heck oder mit einem gemeinsamen Anbindungspunkt von der Bodengruppe und der Außenseitenwand, der Front oder dem Heck zusammentrifft.

Die Anbindungspunkte des Gitterrahmens können die jeweiligen Träger auf jegliche bekannte Art miteinander verbinden, z. B. mittels separater Knotenelemente, durch Verschraubung, durch Verklebung und/oder durch Verschweißung usw. Es sind auch Kombinationen von Verbindungstechniken möglich.

In einer weiteren Ausführungsform ist der tragende Abschnitt als ein Raumfachwerk (zweckmäßig mit Trägern, die in x-, y- und z-Richtung verlaufen) ausgebildet ist.

Die Erfindung betrifft auch ein Verfahren zum Herstellen eines Fahrzeugs wie hierin offenbart. Das Verfahren weist ein Fertigen (zum Beispiel Fügen, vorzugsweise Verschweißen, Verkleben und/oder Verschrauben, ggf. mit oder ohne zusätzliche Bauteile wie Knotenelemente, Bleche, Schrauben, Bolzen usw.) des Gitterrahmens auf, wobei (zweckmäßig gleichzeitig) die mindestens eine Ausstattungskomponente zumindest teilweise als tragender Abschnitt des Gitterahmens direkt in den Gitterrahmen integriert wird, vorzugsweise gleichzeitig mit der Fertigung des übrigen Gitterrahmens.

Die zuvor beschriebenen bevorzugten Ausführungsformen und Merkmale der Erfindung sind beliebig miteinander kombinierbar, solange sie durch die beigefügten Ansprüche gestützt sind.

Weitere Einzelheiten und Vorteile der Erfindung werden im Folgenden unter Bezug auf die beigefügten Zeichnungen beschrieben. Es zeigen:
- Figur 1: eine perspektivische Ansicht eines beispielhaften Gitterrahmens eines Nutzfahrzeugs gemäß der vorliegenden Offenbarung;
- Figur 2: eine Querschnittansicht durch einen beispielhaften Gitterrahmen eines Nutzfahrzeugs gemäß der vorliegenden Offenbarung;
- Figur 3: eine weitere Querschnittansicht durch einen beispielhaften Gitterrahmen eines Nutzfahrzeugs gemäß der vorliegenden Offenbarung; und
- Figur 4: eine weitere andere Querschnittansicht durch einen beispielhaften Gitterrahmen eines Nutzfahrzeugs gemäß der vorliegenden Offenbarung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

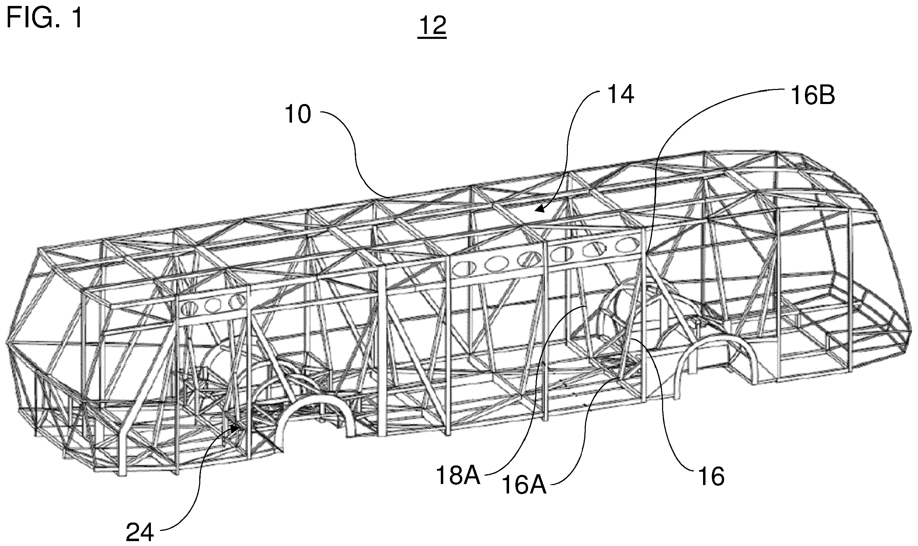

Figur 1 zeigt einen Gitterrahmen 10 eines als Nutzfahrzeug 12 ausgebildeten Fahrzeugs. Besonders bevorzugt ist das Nutzfahrzeug 12 als ein Omnibus ausgeführt, wie dargestellt ist. Es ist allerdings auch möglich, dass das Nutzfahrzeug 12 anders ausgeführt ist, zum Beispiel als ein Lastkraftwagen, oder als ein anderes zweckmäßig motorisiertes Fahrzeug ausgeführt ist.

Der Gitterrahmen 10 bildet einen Hauptrahmen des Nutzfahrzeugs 12 in einer Grippestruktur. Der Gitterrahmen 10 kann beispielsweise als ein Gitterrohrrahmen aus mehreren miteinander verbundenen Rohren und/oder Gitterprofilrahmen aus mehreren miteinander verbundenen Profilen, vorzugsweise Längsprofilen (z. B. Rund- oder Vierkantprofilen), aufgebaut sein. Die Profile können beispielsweise offene oder geschlossene Profile sein. Der Gitterrahmen 10 kann bspw. zumindest teilweise aus einem Metall oder einer Metalllegierung hergestellt sein. Der Gitterrahmen 10 kann nicht nur durch Rohre und Profile gebildet sein, sondern auch bspw. stellenweise zusätzliche durch Blechelemente zweckmäßig versteift werden (z. B. über einem Türportal). Der Gitterrahmen 10 kann ferner bspw. Knotenelemente (Gussteile Frästeile), Konsolen (z. B. Achskonsolen), Halbzeuge, gedruckte Teile, Schmiedeteile usw. aufweisen.

Die Träger (zum Beispiel Rohre oder Profile) des Gitterrahmens 10 sind miteinander in Anbindungspunkten verbunden, sodass sie eine selbsttragende Tragstruktur des Nutzfahrzeugs 12 bilden. Die Verbindungen können beispielsweise zumindest teilweise lösbar, zum Beispiel mittels Verschraubung, und/oder beispielsweise zumindest teilweise unlösbar, zum Beispiel mittels Verkleben oder Verschweißen, erfolgen. Bspw. kann der Gitterrahmen 10 eine Schweißkonstruktion sein.

Der Gitterrahmen 10 bildet ein Dach, einen Boden, ein Heck, eine Front und beide Außenlängsseiten des Nutzfahrzeugs 12. Es ist allerdings beispielsweise auch möglich, dass eines oder mehrere von dem Dach, dem Boden, dem Heck, der Front und den beiden Außenlängsseiten nicht durch den Gitterrahmen 10 gebildet ist, sondern auf andere Art und Weise, zum Beispiel als einzeln an den Gitterrahmen 10 montierbares Modul.

Der Gitterrahmen 10 kann mehrere um eine Längsachse des Nutzfahrzeugs 12 umlaufende Ringspanten und mehrere Träger in Längs- und Querrichtung des Nutzfahrzeugs 12 aufweisen. Zusätzliche Spanten bzw. Träger in Fachwerkstruktur können dem Gitterrahmen 10 die notwendige Steifigkeit geben.

Der Gitterrahmen 10 begrenzt ferner einen Personenaufenthaltsraum 14 des Nutzfahrzeugs 12 außenseitig. Im Personenaufenthaltsraum 14 halten sich während des Betriebs des Nutzfahrzeugs 12 Personen, zum Beispiel Fahrgäste und ein Fahrer, auf. Zweckmäßig kann der Personenaufenthaltsraum 14 einen Fahrgastraum und/oder einen Fahrerarbeitsplatz umfassen. Eine Aufgabe des Gitterrahmens 10 kann es sein, einen definierten Überlebensraum im Personenaufenthaltsraum 14 sicherzustellen.

Der Gitterrahmen 10 weist die Besonderheit auf, dass er nicht nur die Tragstruktur des Nutzfahrzeugs 12 bildet, sondern gleichsam weitere Funktionen integriert. Vorzugsweise kann vorgesehen sein, dass Ausstattungskomponenten 16 - 22 (siehe Figuren 1 bis 4), insbesondere Innenausstattungskomponenten, des Nutzfahrzeugs 12 zumindest teilweise direkt in den Gitterrahmen 10 integriert sind. In anderen Worten, der Gitterrahmen 10 übernimmt Funktionen von Ausstattungskomponenten und die Ausstattungskomponenten tragen selbst als tragende Abschnitte des Gitterrahmens 10 zur Tragstruktur des Nutzfahrzeugs 12 bei.

Beispielsweise weist die Ausstattungskomponente mindestens einen Träger, vorzugsweise Längsträger, Querträger, Vertikalträger und/oder Diagonalträger (z. B. Rohr und/oder Profil), des Gitterrahmens 10 als den tragenden Abschnitt auf. Es ist auch möglich, dass die Ausstattungskomponente mehrere Träger aufweist, die gemeinsam als tragender Abschnitt des Gitterrahmens 10 fungieren. Zum Beispiel können die mehreren Träger in Form eines Raumfachwerks angeordnet sein.

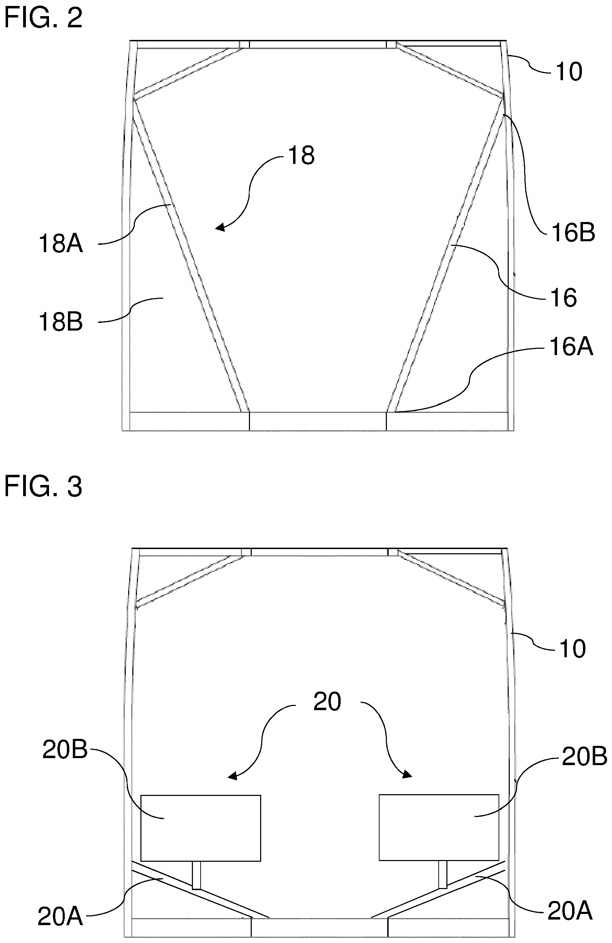

Die als tragende Abschnitte des Gitterrahmens 10 dienenden Abschnitte der Ausstattungskomponenten können lösbar, zum Beispiel mittels Verschraubung, oder unlösbar (fest), zum Beispiel mittels Verkleben oder Verschweißen, mit dem Gitterrahmen 10 verbunden sein. Durch die funktionsintegrierten Ausstattungskomponenten können die Lasteinleitungen im Nutzfahrzeug 12 neu erfolgen. Zweckmäßig entstehen neue Lastpfade, wie anhand der Figuren 2 bis 4 beispielhaft beschrieben ist. Dank der neuen Lastpfade kann der Gitterrahmen 10 an anderer Stelle entlastet und somit vorzugsweise geringer dimensioniert werden, sodass beispielsweise ein verringertes Gesamtgewicht des Nutzfahrzeugs 12 ermöglicht werden kann.

In Figur 2 sind beispielhafte Ausstattungskomponenten 16 und 18 gezeigt, die in den Gitterrahmen 10 integriert werden können.

Beispielsweise kann eine Hand-Festhaltestange 16 in den Gitterrahmen 10 integriert sein. Die Hand-Festhaltestellen 16 kann während der Fahrt des Nutzfahrzeugs 12 beispielsweise von Fahrgästen dazu genutzt werden, sich festzuhalten. Die Hand-Festhaltestange 16 dient somit einerseits zum Festhalten für Fahrgäste und andererseits als tragender Abschnitt des Gitterrahmens 10.

Die Hand-Festhaltestange 16 kann beispielsweise einen runden Querschnitt aufweisen. Es sind allerdings auch andere Querschnittsformen oder allgemein andere Geometrien denkbar.

Im dargestellten Ausführungsbeispiel verläuft die Hand-Festhaltestange 16 in einer vertikalen Querebene des Gitterrahmens 10 bzw. des Nutzfahrzeugs 12. Wie dargestellt ist, kann sich die Hand-Festhaltestange 16 beispielsweise diagonal zwischen einer Bodengruppe und einer Außenseitenwand des Gitterrahmens 10 erstrecken. Durch die im Gitterrahmen 10 integrierte Hand-Festhaltestange 16 entsteht somit ein neuer diagonaler Lastpfad des Gitterrahmens 10. Durch die geneigte Ausführung kann somit eine Diagonale im Personenaufenthaltsraum 14 entstehen, die die Steifigkeit des Gitterrahmens 10 erhöht, zum Beispiel im Falle eines seitlichen Umsturzes. Die Hand-Festhaltestange 16 kann durch ihren diagonalen Verlauf ferner eine Raumtrennung im Personenaufenthaltsraum 14 als zusätzliche Funktion bewirken.

Beispielsweise kann die Hand-Festhaltestange 16 an einem Ende mit der Bodengruppe des Gitterrahmens 10 verbunden, zum Beispiel verschraubt, verschweißt und/oder verklebt, sein. An einem gegenüberliegenden Ende kann die Hand-Festhaltestange 16 mit einer Längsaußenseitenwand des Gitterrahmens 10 verbunden, zum Beispiel verschraubt, verschweißt und/oder verklebt, sein. Es ist allerdings auch möglich, dass die Hand-Festhaltestange anders ausgeführt ist und/oder anders verläuft, zum Beispiel zumindest teilweise vertikal und/oder zumindest teilweise horizontal.

Wie in Figur 1 beispielhaft dargestellt ist, kann die Hand-Festhaltestange 16 insbesondere so mit dem übrigen Gitterrahmen 10 verbunden sein, dass sie mit der Bodengruppe und der Längsaußenseitenwand des Gitterrahmens 10 an Punkten zusammentrifft, an denen die Bodengruppe und die Längsaußenseitenwand bereits Anbindungspunkte 16A, 16B aus mehreren miteinander zusammentreffenden Trägern des Bodens oder der Längsaußenseitenwand aufweist. Auch die tragenden Abschnitte weiterer Ausstattungskomponenten des Nutzfahrzeugs können derart mit Anbindungspunkten im Dach, im Boden, in den Längsaußenseiten, im Heck und/oder in der Front des Gitterrahmens 10/des Nutzfahrzeugs 12 verbunden sein.

Es ist auch möglich, dass beispielsweise eine Innentrennwand 18 zumindest teilweise (z. B. als Träger oder Blech) in den Gitterrahmen 10 integriert ist, wie in Figur 2 dargestellt ist.

Die Innentrennwand 18 kann einen Träger, insbesondere einen Diagonalträger, 18A und ein Wandelement 18B aufweisen. Der Träger 18A kann sich beispielsweise zwischen einer Bodengruppe und einer Längsaußenseitenwand des Gitterrahmens 10 erstrecken. Das Wandelement 18B kann zwischen dem Träger 18A, der Bodengruppe und der Längsaußenseitenwand des Gitterrahmens 10 angeordnet sein. Es ist möglich, dass der Träger 18A zusätzlich oder alternativ zumindest teilweise horizontal und/oder zumindest teilweise vertikal verläuft. Es ist auch möglich, dass der Träger 18A sich bspw. bis zu einem Dach des Gitterrahmens 10 erstreckt.

Wie dargestellt ist, kann die Innentrennwand 18 beispielsweise in einer vertikalen Querebene des Gitterrahmens 10 bzw. des Nutzfahrzeugs 12 verlaufen. Es ist allerdings auch möglich, dass die Innentrennwand 18 anders verläuft, zum Beispiel in einer vertikalen Längsebene des Gitterrahmens 10 bzw. des Nutzfahrzeugs 12 oder schräg dazu verläuft.

Die Figur 3 zeigt ein erfindungsgemäßes Ausführungsbeispiel. Hier ist als Ausstattungskomponente eine Fahrzeugsitzvorrichtung 20 des Nutzfahrzeugs 12 teilweise in den Gitterrahmen 10 integriert. Insbesondere kann einen Befestigungsträger 20A der Fahrzeugsitzvorrichtung 20 als Diagonalträger in den Gitterrahmen 10 integriert sein. Sitze 20B der Fahrzeugsitzvorrichtung 20 können an dem Befestigungsträger 20A z. B. lösbar befestigt sein. Es ist möglich, dass zusätzliche oder alternative zumindest teilweise horizontal und/oder zumindest teilweise vertikal verlaufende Befestigungsträger angeordnet sind.

Alternativ oder zusätzlich zu der Fahrzeugsitzvorrichtung 20 kann bspw. auch eine Anlehnvorrichtung zum Anlehnen teilweise oder vollständig in dem Gitterrahmen 10 integriert sein (nicht dargestellt).

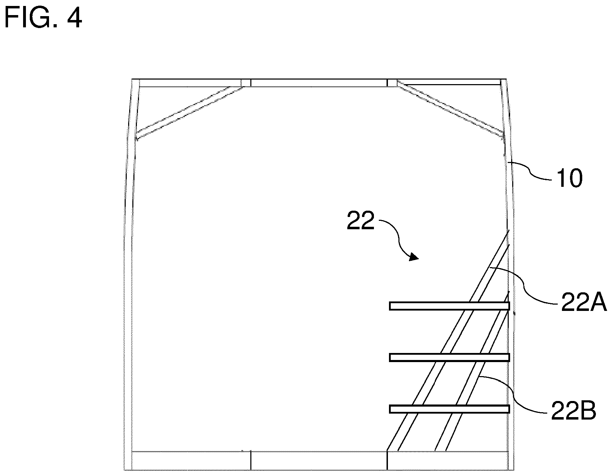

Die Figur 4 zeigt ein nicht beanspruchtes Ausführungsbeispiel. Hier ist als Ausstattungskomponente eine Gepäckablage 22 des Nutzfahrzeugs 12 teilweise in den Gitterrahmen 10 integriert. Insbesondere kann zumindest ein Träger 22A, 22B der Gepäckablage 22, zum Beispiel ein Horizontal-, Vertikal oder Diagonalträger der Gepäckablage 22, in den Gitterrahmen 10 integriert sein. Die Gepäckablage 22 kann offen, wie dargestellt ist, oder geschlossen, z B. in Form eines Aufnahmefachs, ausgebildet sein.

Selbstverständlich können auch zusätzliche oder alternative Ausstattungskomponenten im Personenaufenthaltsraum 14 des Nutzfahrzeugs 12 zumindest teilweise als tragende Abschnitte des Gitterrahmens 10 direkt in den Gitterrahmen 10 integriert sein. Die hier aufgeführten, nicht beanspruchten Beispiele umfassend die Hand-Festhaltestange 16, die Innentrennwand 18 und die Gepäckablage 22 sind als rein beispielhafte, bevorzugte Ausführungsvarianten zu verstehen. Unter erneuter Bezugnahme auf Figur 1 zeigt diese auch, dass in einer nicht beanspruchten Ausführungsform neben den Ausstattungskomponenten, bspw. auch ein Podest 24, vorzugsweise Fußpodest, als Ausstattungskomponente auf vorteilhafte Weise, z. B. in Form eines Raumfachwerks aus mehreren Trägern zweckmäßig mit Innenstruktur (wie dargestellt ist), in den Gitterrahmen 10 integriert sein kann. Das Podest 24 kann somit ebenfalls als tragender Abschnitt des Gitterrahmens 10 fungieren. Es sind auch andere Podeste (z. B. Motorpodest, Achspodest) oder bspw. (Boden, Einstiegs- oder Ausstiegs-) Stufen, denkbar, die als tragende Abschnitte im Gitterrahmen integriert sein können.

Neben dem erfindungsgemäßen Fahrzeug offenbart die vorliegende Offenbarung auch ein Verfahren zum Herstellen eines Fahrzeugs. Das Verfahren umfasst, dass mindestens eine Ausstattungskomponente 16-24 zumindest teilweise als tragender Abschnitt des Gitterahmens 10 direkt bei einer Fertigung des Gitterrahmens 10 in den Gitterrahmen 10 integriert wird, z. B. lösbar oder unlösbar.

Die Erfindung ist nicht auf die vorstehend beschriebenen bevorzugten Ausführungsbeispiele beschränkt. Der Gegenstand des Schutzbegehrens wird in den beigefügten Ansprüchen definiert.

### Bezugszeichenliste

- 10: Gitterrahmen
- 12: Nutzfahrzeug
- 14: Personenaufenthaltsraum
- 16: Hand-Festhaltestange (Ausstattungskomponente)
- 16A: Anbindungspunkt
- 16B: Anbindungspunkt
- 18: Innentrennwand (Ausstattungskomponente)
- 18A: Diagonalträger
- 18B: Wandelement
- 20: Fahrzeugsitzvorrichtung (Ausstattungskomponente)
- 20A: Befestigungsträger
- 20B: Sitz
- 22: Gepäckablage (Ausstattungskomponente)
- 22A/B: Träger
- 24: Fußpodest

## Patentansprüche

1. Fahrzeug, vorzugsweise Nutzfahrzeug (12), zum Beispiel Omnibus, aufweisend:
einen Gitterrahmen (10), der eine Gerippetragstruktur des Fahrzeugs (12) bildet und einen Personenaufenthaltsraum (14) des Fahrzeugs (12) begrenzt; und
mindestens eine Ausstattungskomponente (16, 18, 20, 22, 24), vorzugsweise Innenausstattungskomponente, die in dem Personenaufenthaltsraum (14) angeordnet ist und zumindest teilweise als ein tragender Abschnitt des Gitterahmens (10) in den Gitterrahmen (10) integriert ist, vorzugsweise zum Bilden eines neuen Lastpfads in dem Gitterrahmen (10),
wobei:
die mindestens eine Ausstattungskomponente (16, 18, 20, 22, 24) eine Fahrzeugsitzvorrichtung (20) und/oder eine Anlehnvorrichtung aufweist, die mindestens einen oder mehrere Träger als den tragenden Abschnitt des Gitterrahmens (10) aufweist;
**dadurch gekennzeichnet, dass**
der Gitterrahmen (10) eine Außenseitenwand des Fahrzeugs bildet, wobei die Außenseitenwand mehrere Träger des Gitterrahmens (10) aufweist, die sich in einem Anbindungspunkt treffen, und der tragende Abschnitt der mindestens einen Ausstattungskomponente (16, 18, 20, 22, 24) mit der Außenseitenwand in dem Anbindungspunkt der Außenseitenwand zusammentrifft, und/oder der Gitterrahmen (10) eine Bodengruppe des Fahrzeugs bildet, wobei die Bodengruppe mehrere Träger des Gitterrahmens (10) aufweist, die sich in einem Anbindungspunkt treffen, und der tragende Abschnitt der mindestens einen Ausstattungskomponente (16, 18, 20, 22, 24) mit der Bodengruppe in dem Anbindungspunkt der Bodengruppe zusammentrifft.

2. Fahrzeug nach Anspruch 1, wobei:
die mindestens eine Ausstattungskomponente (16, 18, 20, 22, 24) mindestens einen, vorzugsweise einen geradlinigen oder gebogenen stangen- oder rohrförmigen, Träger, vorzugsweise Längsträger, Querträger, Vertikalträger und/oder Diagonalträger, des Gitterrahmens (10) als den tragenden Abschnitt aufweist.

3. Fahrzeug nach Anspruch 1 oder Anspruch 2, wobei:
die mindestens eine Ausstattungskomponente (16, 18, 20, 22, 24) oberhalb eines Bodens des Personenaufenthaltsraums (14) und/oder unterhalb eines Dachs des Personenaufenthaltsraums (14) des Fahrzeugs angeordnet ist.

4. Fahrzeug nach einem der vorherigen Ansprüche, wobei:
der Gitterrahmen (10) eine oder beide Längsaußenseiten, eine Front, ein Heck, eine Bodengruppe und/oder ein Dach des Fahrzeugs bildet.

5. Fahrzeug nach einem der vorherigen Ansprüche, wobei:
der tragende Abschnitt lösbar, vorzugsweise verschraubt, mit dem übrigen Gitterrahmen (10) verbunden ist; oder
der tragende Abschnitt unlösbar, vorzugsweise verklebt oder verschweißt, mit dem übrigen Gitterrahmen (10) verbunden ist.

6. Fahrzeug nach einem der vorherigen Ansprüche, wobei:
der Gitterrahmen (10) ein Dach des Fahrzeugs bildet, wobei das Dach mehrere Träger des Gitterrahmens (10) aufweist, die sich in einem Anbindungspunkt treffen; und
der tragende Abschnitt der mindestens einen Ausstattungskomponente (16, 18, 20, 22, 24) mit dem Dach in dem Anbindungspunkt des Dachs zusammentrifft.

7. Fahrzeug nach einem der vorherigen Ansprüche, wobei:
der tragende Abschnitt als ein Raumfachwerk ausgebildet ist.

8. Verfahren zum Herstellen eines Fahrzeugs nach einem der vorherigen Ansprüche, aufweisend:
Fertigen des Gitterrahmens (10), wobei die mindestens eine Ausstattungskomponente (16, 18, 20, 22, 24) zumindest teilweise als tragender Abschnitt des Gitterahmens (10) direkt in den Gitterrahmen (10) integriert wird, vorzugsweise gleichzeitig mit der Fertigung des übrigen Gitterrahmens.

## Claims

1. A vehicle, preferably a utility vehicle (12), for example a bus, having:
a lattice frame (10), which forms a framework structure of the vehicle (12) and delimits a person-accommodating space (14) of the vehicle (12); and
at least one equipment component (16, 18, 20, 22, 24), preferably an internal equipment component, which is arranged in the person-accommodating space (14) and is at least partly integrated into the lattice frame (10) as a supporting section of the lattice frame (10), preferably for forming a new load path in the lattice frame (10),
wherein:
the at least one equipment component (16, 18, 20, 22, 24) has a vehicle seating device (20) and/or a backrest device, which has at least one or more supports as the supporting section of the lattice frame (10), **characterized in that**
the lattice frame (10) forms an outer side wall of the vehicle, wherein the outer side wall has a plurality of supports of the lattice frame (10), which meet one another at an attachment point, and the supporting section of the at least one equipment component (16, 18, 20, 22, 24) meets the outer side wall at the attachment point of the outer side wall, and/or the lattice frame (10) forms a floor assembly of the vehicle, wherein the floor assembly has a plurality of supports of the lattice frame (10), which meet at an attachment point, and the supporting section of the at least one equipment component (16, 18, 20, 22, 24) meets the floor assembly at the attachment point of the floor assembly.

2. The vehicle according to Claim 1, wherein:
the at least one equipment component (16, 18, 20, 22, 24) has at least one support, preferably a straight or curved rod- or tube-like support, preferably a longitudinal support, transverse support, vertical support and/or diagonal support, of the lattice frame (10) as the supporting section.

3. The vehicle according to Claim 1 or Claim 2, wherein:
the at least one equipment component (16, 18, 20, 22, 24) is arranged above a floor of the person-accommodating space (14) and/or underneath a roof of the person-accommodating space (14) of the vehicle.

4. The vehicle according to one of the preceding claims, wherein:
the lattice frame (10) forms one or both longitudinal outer sides, a front, a rear, a floor assembly and/or a roof of the vehicle.

5. The vehicle according to one of the preceding claims, wherein:
the supporting section is connected detachably, preferably bolted, to the remainder of the lattice frame (10); or
the supporting section is connected non-detachably to the remainder of the lattice frame (10), preferably adhesively bonded or welded.

6. The vehicle according to one of the preceding claims, wherein:
the lattice frame (10) forms a roof of the vehicle, wherein the roof has a plurality of supports of the lattice frame (10), which meet at an attachment point; and
the supporting section of the at least one equipment component (16, 18, 20, 22, 24) meets the roof at the attachment point of the roof.

7. The vehicle according to one of the preceding claims, wherein:
the supporting section is formed as a space frame.

8. A method for producing a vehicle according to one of the preceding claims, including:
fabrication of the lattice frame (10), wherein the at least one equipment component (16, 18, 20, 22, 24) is at least partly integrated directly into the lattice frame (10) as a supporting section of the lattice frame (10), preferably at the same time as the fabrication of the remainder of the lattice frame.

## Revendications

1. Véhicule, de préférence véhicule utilitaire (12), par exemple autobus, comprenant :
un cadre grillagé (10), qui forme une structure porteuse d'ossature du véhicule (12) et délimite un espace de séjour de personnes (14) du véhicule (12) ; et
au moins un composant d'équipement (16, 18, 20, 22, 24), de préférence un composant d'équipement intérieur, qui est agencé dans l'espace de séjour de personnes (14) et qui est au moins partiellement intégré dans le cadre grillagé (10) en tant que section porteuse du cadre grillagé (10), de préférence pour former un nouveau chemin de charge dans le cadre grillagé (10) ;
dans lequel :
l'au moins un composant d'équipement (16, 18, 20, 22, 24) comprend un dispositif de siège de véhicule (20) et/ou un dispositif d'appui qui comprend au moins un ou plusieurs supports en tant que section porteuse du cadre grillagé (10) ;
**caractérisé en ce que**
le cadre grillagé (10) forme une paroi latérale extérieure du véhicule, la paroi latérale extérieure comprenant plusieurs supports du cadre grillagé (10) qui se rencontrent en un point d'attache, et la section porteuse de l'au moins un composant d'équipement (16, 18, 20, 22, 24) rencontrant la paroi latérale extérieure au point d'attache de la paroi latérale extérieure, et/ou le cadre grillagé (10) forme un ensemble de plancher du véhicule, l'ensemble de plancher comprenant plusieurs supports du cadre grillagé (10) qui se rencontrent en un point d'attache, et la section porteuse de l'au moins un composant d'équipement (16, 18, 20, 22, 24) rencontrant l'ensemble de plancher au point d'attache de l'ensemble de plancher.

2. Véhicule selon la revendication 1, dans lequel :
l'au moins un composant d'équipement (16, 18, 20, 22, 24) comprend au moins un support, de préférence rectiligne ou courbé, en forme de barre ou de tube, de préférence un support longitudinal, un support transversal, un support vertical et/ou un support diagonal, du cadre grillagé (10) en tant que section porteuse.

3. Véhicule selon la revendication 1 ou la revendication 2, dans lequel :
l'au moins un composant d'équipement (16, 18, 20, 22, 24) est agencé au-dessus d'un plancher de l'espace de séjour de personnes (14) et/ou au-dessous d'un toit de l'espace de séjour de personnes (14) du véhicule.

4. Véhicule selon l'une quelconque des revendications précédentes, dans lequel :
le cadre grillagé (10) forme un ou les deux côtés extérieurs longitudinaux, un avant, un arrière, un ensemble de plancher et/ou un toit du véhicule.

5. Véhicule selon l'une quelconque des revendications précédentes, dans lequel :
la section porteuse est reliée de manière amovible, de préférence vissée, au reste du cadre grillagé (10) ; ou
la section porteuse est reliée de manière inamovible, de préférence collée ou soudée, au reste du cadre grillagé (10).

6. Véhicule selon l'une quelconque des revendications précédentes, dans lequel :
le cadre grillagé (10) forme un toit du véhicule, le toit comprenant plusieurs supports du cadre grillagé (10) qui se rencontrent en un point d'attache ; et
la section porteuse de l'au moins un composant d'équipement (16, 18, 20, 22, 24) rencontre le toit au point d'attache du toit.

7. Véhicule selon l'une quelconque des revendications précédentes, dans lequel :
la section porteuse est configurée sous la forme d'un treillis tridimensionnel.

8. Procédé de fabrication d'un véhicule selon l'une quelconque des revendications précédentes, comprenant :
la fabrication du cadre grillagé (10), l'au moins un composant d'équipement (16, 18, 20, 22, 24) étant au moins partiellement intégré directement dans le cadre grillagé (10) en tant que section porteuse du cadre grillagé (10), de préférence en même temps que la fabrication du reste du cadre grillagé.
